# EUROPEAN PATENT SPECIFICATION

(11) **EP 2 677 248 B1**
(45) Date of publication and mention of the grant of the patent: **06.04.2016**
(21) Application number: 13425073.7
(22) Date of filing: 13.05.2013
(51) Int. Cl.: F24H 9/00, F24D 19/00, A47K 10/06

(54) **Fan-assisted Radiator, Preferably a Fan-assisted Heated Towel Rail, and Related Ventilation System**
Gebläseunterstützter Heizkörper, vorzugsweise ein gebläseunterstützter beheizter Handtuchwärmer und zugehöriges Belüftungssystem
Radiateur doté d'un dispositif de ventilation, de préférence un porte-serviettes chauffé doté d'un dispositif de ventilation et système de ventilation associé

(30) Priority: 11.05.2012 IT RM20120210
(43) Date of publication of application: 25.12.2013
(73) Proprietor: Cordivari S.r.L., 64020 Morro d'Oro (TE) (IT)
(72) Inventor: Cordivari, Ercole, 64020 Morro D'ORO (TE) (IT)
(74) Representative: Santi, Filippo

(56) References cited:
- AT-A4- 508 134
- GB-A- 1 040 189
- US-A1- 2009 257 870

## Description

The present invention relates to a fan-assisted radiator, preferably a fan-assisted heated towel rail, and related ventilation system.

More specifically, the present invention relates to a ventilated radiator, preferably working with a low temperature heat carrier fluid, permitting in an easy, quick, reliable, ecological and cheap way heating a closed environment, thus permitting a remarkable energy saves.

In the following of the present specification and in claims, term "radiator" defines a heating body, usually comprising two or more radiating elements, emitting heat by natural and irradiation convection. Particularly, specification and figures represent a towel rail, even if technical teachings according to the invention can be applied to every radiator having the above features.

It is known that in recent years and always more needing of comfort exist both in residential applications and in receptive structures. In winter heating applications, radiator is configured as a terminal of a system to which it is given the work of efficiently distributing heat provided, from thermal energy generation system through a heat carrier fluid to every single environment.

Starting from thermal exchange thermodynamic laws, it is observed that a higher inlet temperature of heat carrier fluid corresponds to a better performance of system terminal, in terms of thermal energy obtained. Needing of reducing energetic consumption has involved in recent years the needing of using heat carrier fluid with always lower temperatures, in correspondence of which radiators have a low efficiency. Particularly, when maximum temperature of heat carrier fluid is higher than 55° C, heating systems are conventionally indicated as high temperature systems; vice versa, when maximum temperature of heat carrier fluid is lower than 55° C, heating systems are conventionally indicated as low temperature systems.

The above trend to reduce heat carrier temperature is the same both for heating systems employing condensation boilers and for systems using heat pumps. Needing of keeping quite low temperatures of heat carrier fluid is, in the first case, connected to the possibility of exploiting evaporation latent heat of water contained within combustion products and, in second case, to the needing of obtaining high performance coefficients, also known as COP (Coefficient Of Performance), and thus, low electric energy consumption.

The use of conventional radiators in low temperature heating systems is strongly penalized by the fact that natural convection exchange is remarkably reduced with reduction of difference ΛT between average temperature T1 of heat carrier fluid and air temperature Ta of environment to be heated (ΛT = Tf - Ta), and, consequently, with the same thermal requirements, standard radiators are bulky.

Examples of modified fan convectors or radiators, instead of conventional radiators, are, e.g. those described in documents US 2006/174864 A1, DE 202009002307 U1, FR 2947040 A1, GB 1040189 A, US 2009/257870 A1 and AT 508135 A4.

However, none of the above examples is particularly efficient in permitting obtaining a remarkable energetic saving.

In this context, it is included the solution suggested according to the present invention, permitting solving the above drawbacks.

Object of the present invention is therefore that of permitting, in an easy, quick, reliable, ecological and cheap way heating a closed environment, thus permitting a remarkable energy saving with reduced dimensions.

It is specific object of the present invention, a radiator, in particular a heated towel rail, having at least one radiating surface, characterized in comprising, in its rear side and in correspondence of said at least one radiating surface, at least one forced ventilation system, said forced ventilation system comprising at least one ventilation means and a corresponding air duct, able to convey the air produced by said ventilation means through said radiating surface, from the rear portion of said radiator towards its front portion, and in that said air duct is tilted with respect to said radiating surface of said radiator of an angle comprised between 0° and 60°.

Further, according to the invention, said ventilation system is substantially positioned in the bottom and/or intermediate and/or upper part in respect to the vertical extension of said radiator.

In a particular embodiment according to the invention, said radiator can comprise at least two radiating surfaces and two corresponding ventilation systems, a first ventilation system positioned in the lower part in respect to the vertical extension of said radiator and a second ventilation system positioned in its upper part.

In a further embodiment according to the invention, said air duct is substantially positioned along the whole height of said radiator.

Particularly, according to the invention, said air duct can be tilted with respect to said radiating surface of said radiator of an angle comprised between 10° and 45°, preferably said angle can be of 15°.

Still, according to the invention, said at least one ventilation means are an electric fan.

Always according to the invention, said radiating surface can comprise a plurality of radiating elements and an inlet collector and an outlet collector, said collectors being transversal in respect to said radiating elements.

Furthermore, according to the invention, said radiator, during its use it is run down by a heat-transfer fluid having a temperature (Tf) equivalent or lower than approximately 55°.

Still according to the invention, said radiator can comprise activation/deactivation means of said ventilation means.

It is further specific object of the present invention, a forced ventilation system for radiators having at least one radiating surface, characterized in comprising at least one ventilation means and a corresponding air duct, able to convey the air produced by said at least one ventilation means, and in that said air duct is tilted with respect to said radiating surface of said radiator of an angle comprised between 0° and 60°.

Finally, according to the invention, said rear wall of said air duct can be tilted of an angle comprised between 10° and 45°, preferably said angle can be of 15°.

The invention will be now described, for illustrative, but not limitative purposes, with particular reference to the figures of the enclosed drawings, wherein
figure 1 shows a front view of a first embodiment of the radiator according to the invention;
figure 2 shows a lateral view of radiator of figure 1;
figure 3 shows a rear view of radiator of figure 1;
figure 4 shows an exploded rear perspective view of radiator of figure 1;
figure 5 shows a section lateral view of radiator of figure 1 in a ventilated heating mode;
figure 6 shows a graph representing results of experimental tests carried out on radiator of figure 1;
figure 7 shows a front view of a second embodiment of a radiator according to the invention;
figure 8 shows a lateral view of radiator of figure 7;
figure 9 shows a rear view of radiator of figure 7;
figure 10 shows a front view of a third embodiment of a radiator according to the invention;
figure 11 shows a lateral view of radiator of figure 10; and
figure 12 shows a rear view of radiator of figure 10.

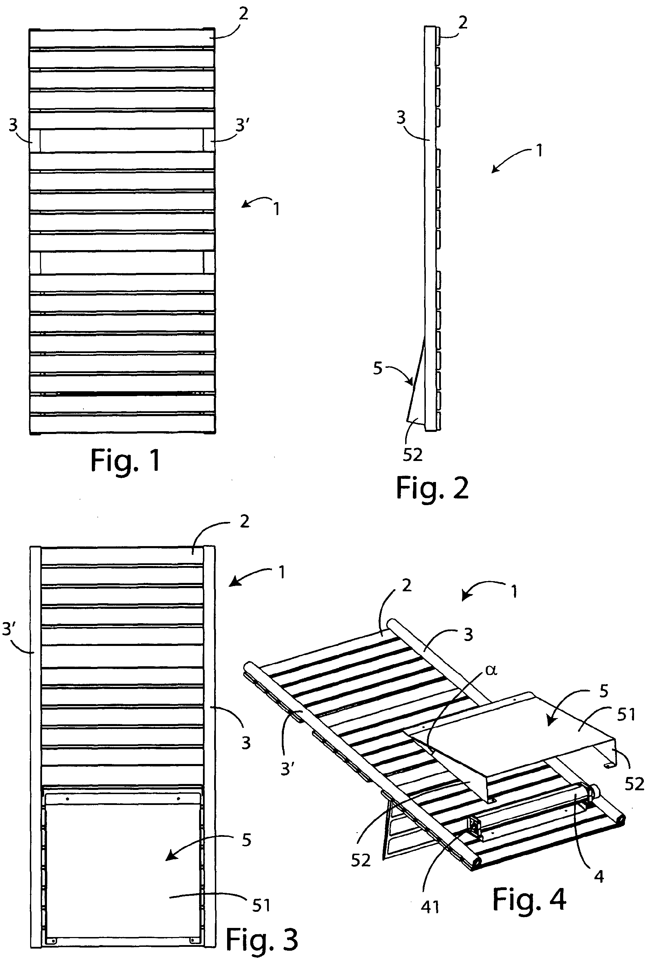

Making reference to figures 1 - 5, it is observed the first embodiment of radiator according to the present invention, indicated by reference number 1. Said radiator 1, particularly a heated towel rail for bathroom, comprises a radiating surface including a plurality of hollow horizontal radiating elements 2, in particular in this embodiment eighteen elements, and two hollow collectors 3, transversely disposed with respect to said radiating elements 2, respectively an inlet collector and an outlet collector. Each one of said collectors 3 is connected to one end of said radiating elements 2. A heat carrier fluid flows along said radiating surface at a set temperature Tf, when radiator 1 is operative. Preferably, in low temperature heating systems, said heat carrier fluid has a temperature Tf lower than 55°.

Said radiator 1 has a natural convection operation mode, i.e. through the passage of heat carrier fluid from a first collector to radiating elements 2, the same irradiating heat 20 within environment wherein it is provided.

Said radiator 1 further comprises a forced ventilation system 10 comprising ventilation means, i.e. an electric fan 4, and an air duct 5, in correspondence of said electric fan 4.

Said electric fan 4 is positioned in the rear lower part of said radiator 1 and has air exit opening 41 faced upward. Said air duct 6 has a rear wall 51 and two lateral flaps 52, in such a way to contain said electric fan 4 in the rear, permitting inlet of air from bottom part and diffusion of air toward said radiating elements 2. Particularly, said lateral flaps 52 of said air duct 5 have a triangle shape, with the upper angle α lower than 60°; preferably, said upper angle α between 10° and 45°, in the preferred embodiment shown said angle α being 15°.

Therefore, rear wall of said air duct 5 is inclined with respect to said radiating surface of said radiator 1 of said angle α.

Said air duct 5 can be obtained by a fold sheet or a plastic sheet, or sheets comprised of other suitable materials.

Inclination of said air duct permits an easy positioning of towels of the horizontal radiating elements, so as to dry them much quicker.

Said forced ventilation system 10 is connected to a general transformation system of main supply (not shown) and can be operated or deactivated by a switch (not shown) that can be actuated by the user.

Said switch can be included in a control panel (not shown), provided on said radiator, through which the user has the possibility of managing the control of the radiator and particularly activation or deactivation of the forced ventilation system, setting operation intensity of electric fan.

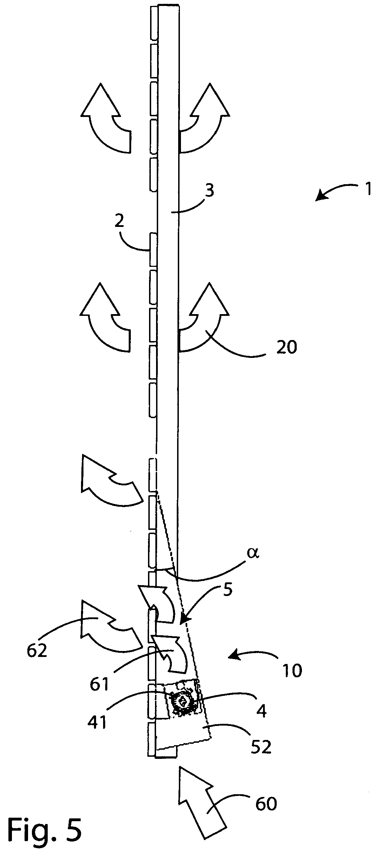

Making reference to figure 5, it is noted operation of radiator 1 when said forced ventilation system 10 is actuated: by said electric fan 4, air arriving from environment 60, at a temperature Ta, is taken from lower portion of said air duct 5 and conveyed toward radiating elements 2. By passage of air 61 from said forced ventilation system 10 through said radiating elements 2, said air 62 heats, further heating environment in combination with standard natural convection operation of radiator 1.

The above advantageously permits optimizing thermal exchange processes by the powerful motion action of air flows caused by ventilation systems 10.

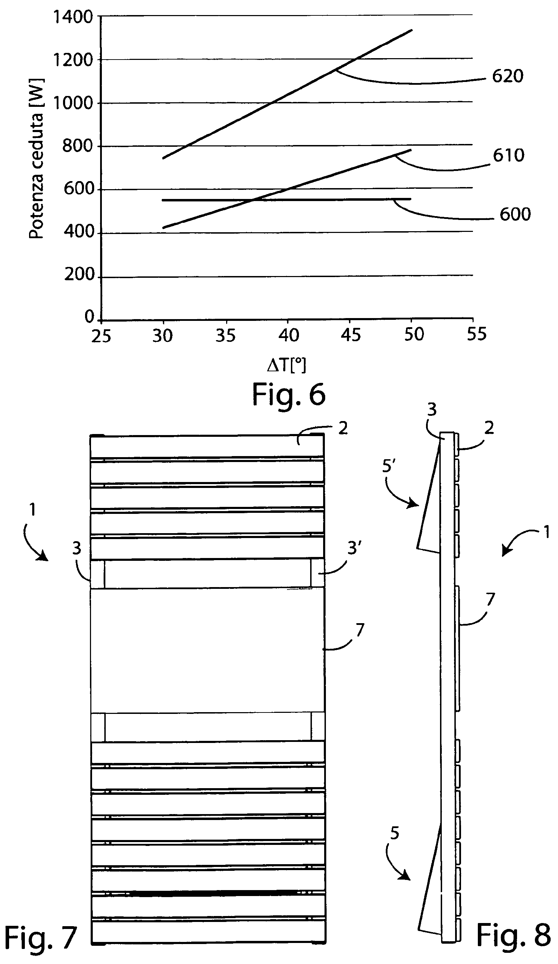

Observing now graph of figure 6, they are represented results of experimental tests carried out on radiator according to the invention.

In Cartesian graph of figure 6, in abscissa it is indicated T value (in Celsius degrees) between average temperature Tf of heat carrier fluid and air temperature Ta of environment to be heated ( T=Tf-Ta), while in ordinate axis it is represented the value of delivered thermal power (expressed in Watt). Graph has been obtained taking into consideration heating operation mode of the preferred embodiment of radiator according to the invention at the maximum speed. Curve 600 represents ideal average thermal needing of a standard room to be heated with a useful surface of 11 m², particularly a bathroom (with a room temperature corresponding to the average temperature in Italy during the winter period); curve 610 represent power delivered by radiator 1 according to the invention in the preferred embodiment and ventilation system switched off; curve 620 represents delivered power of the preferred embodiment of radiator 1 according to the invention with forced ventilation system 10 switched on. It is easy noting that preferred embodiment of radiator 1 according to the invention with ventilation system switched on has performances really better that needing 600 both as far as operation conditions with high T are concerned and with low T, which is a different condition with respect to the condition with radiator switched off. The latter aspect demonstrates that radiator 1 according to the invention can be advantageously used in high energetic efficiency systems, wherein choice of renewable energetic sources and high efficiency systems (e.g. heat pumps and condensation boilers) imposes an operation under reduced T.

Therefore, said radiator is advantageously suitable to be used in low temperature systems, being a valid alternative to radiating systems, i.e. to remarkably increase efficiency of the same in high temperature systems permitting reducing the number of and dimensions of radiators necessary with the same performances.

Further, said radiator according to the invention has the advantage of being possibly used also in high temperature systems, giving very good use performances.

Still, radiator according to the invention permits having reduced dimensions, even giving high performances, limiting spaces necessary on the wall and promoting installation by replacing existing radiators.

A second embodiment of radiator according to the invention is shown in figures 7 - 9, wherein, differently with respect to the above first embodiment, said radiator 1 has a not-ventilated panel 7 in its intermediate central portion. Further, said radiator 1 also has in the upper rear part a further ventilation system 5', thus increasing heating capability of radiator.

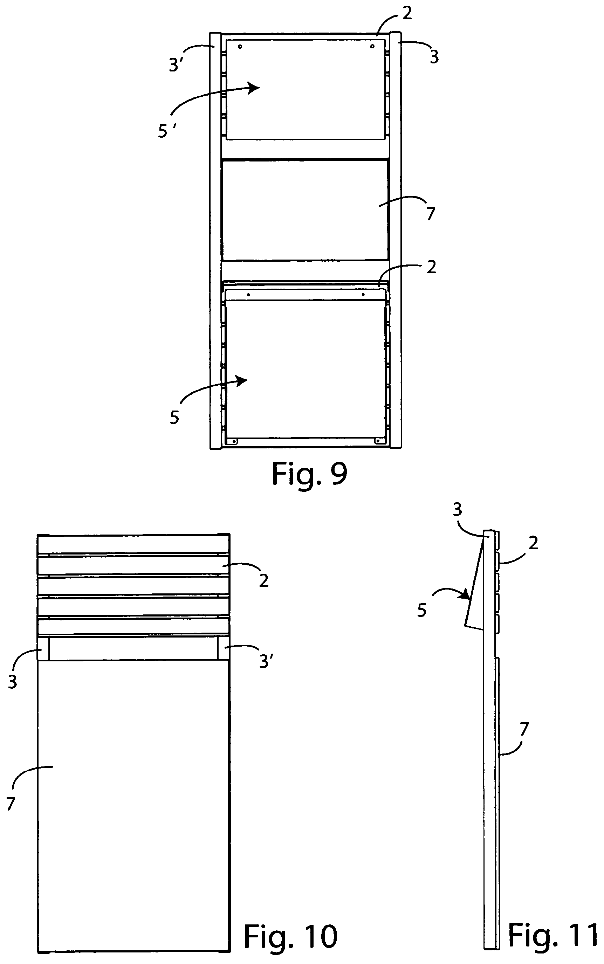

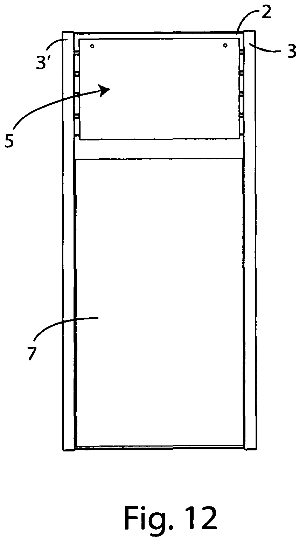

Finally in figures 10 - 12 it is shown a third embodiment of radiator according to the invention, wherein, differently with respect to the above embodiments, said radiator 1 has a not-ventilated panel 7 all along the lower portion and the intermediate central portion. Said ventilation system 5 it is only provided in correspondence of the upper radiating part of said radiator 11.

In further embodiments, not shown, said radiator according to the present invention has said ventilation system in a substantially intermediate position or above its vertical extension, on the basis of the heating needing of the environment.

Finally, in further embodiments, not shown, said radiator according to the present invention has two or more ventilation systems provided at different heights, behind said radiator, so as to increase speed and heating capability of environment within which it is provided and in correspondence of not-ventilated areas said radiator can have not-ventilated panels, just for aesthetic purposes.

Advantageously, radiator according to the invention can be perfectly used in bathrooms and service rooms such as washing rooms in buildings and passage rooms or to support cooking zones of the same.

The present invention has been described for illustrative, but not limitative, purposes according to its preferred embodiments, but it is to be understood that modifications and changes can be introduced by those skilled in the art without departing from the relevant scope as defined in the enclosed claims.

## Claims

1. Radiator (1), in particular a heated towel rail, having at least one radiating surface, comprising, in its rear side and in correspondence of said at least one radiating surface, at least one forced ventilation system (10), said at least one forced ventilation system (10) comprising at least one ventilation means (4) and a corresponding air duct (5), able to convey the air produced by said at least one ventilation means (4) through said at least one radiating surface, from the rear portion of said radiator (1) towards its front portion, said radiator (1) being **characterized in that** said air duct (5) is tilted with respect to said at least one radiating surface of said radiator (1) of an angle comprised between 0° and 60°.

2. Radiator (1), in particular a heated towel rail, according to claim 1, **characterized in that** said at least one forced ventilation system (10) is substantially positioned in the bottom and/or intermediate and/or upper part in respect to the vertical extension of said radiator (1).

3. Radiator (1), in particular a heated towel rail, according to anyone of the preceding claims, **characterized in** comprising at least two radiating surfaces and two corresponding ventilation systems (5, 5'), a first ventilation system (5) positioned in the lower part in respect to the vertical extension of said radiator (1) and a second ventilation system (5') positioned in its upper part.

4. Radiator (1), in particular a heated towel rail, according to claim 1, **characterized in that** said air duct (5) is substantially positioned along the whole height of said radiator (1).

5. Radiator (1), in particular a heated towel rail, according to anyone of the preceding claims, **characterized in that** said air duct (5) is tilted with respect to said at least one radiating surface of said radiator (1) of an angle comprised between comprised between 10° and 45°, preferably of an angle of 15°.

6. Radiator (1), in particular a heated towel rail, according to anyone of the preceding claims, **characterized in that** said at least one ventilation means is an electric fan (4).

7. Radiator (1), in particular a heated towel rail, according to anyone of the preceding claims, **characterized in that** said at least one radiating surface comprises a plurality of radiating elements (2) and an inlet collector (3) and an outlet collector (3'), said collectors (3, 3') being transversal in respect to said radiating elements (2).

8. Radiator (1), in particular a heated towel rail, according to anyone of the preceding claims, **characterized in that** during its use it is run down by a heat-transfer fluid having a temperature (Tf) equivalent or lower than approximately 55°.

9. Radiator (1), in particular a heated towel rail, according to anyone of the preceding claims, **characterized in** further comprising activation/deactivation means of said at least one ventilation means (4).

## Patentansprüche

1. Heizkörper (1), insbesondere ein beheizter Handtuchhalter, mit wenigstens einer Heizfläche, in seiner Rückseite und in Entsprechung mit der genannten wenigstens einen Heizfläche, wenigstens ein Zwangsbelüftungssystem (10) umfassend, wobei das genannte wenigstens eine Zwangsbelüftungssystem (10) wenigstens ein Belüftungsmittel (4) und einen entsprechenden Luftkanal (5) umfasst, der fähig ist, die vom genannten wenigstens einen Belüftungsmittel (4) erzeugte Luft durch die genannte wenigstens eine Heizfläche, vom hinteren Abschnitt des genannten Heizkörpers (1) in Richtung seines vorderen Abschnitts zu transportieren, wobei der genannte Heizkörper (1) **dadurch gekennzeichnet ist, dass** der genannte Luftkanal (5) in Bezug auf die genannte wenigstens eine Heizfläche des genannten Heizkörpers (1) in einem Winkel zwischen 0° und 60° geneigt ist.

2. Heizkörper (1), insbesondere ein beheizter Handtuchhalter, nach Anspruch 1, **dadurch gekennzeichnet, dass** das genannte wenigstens eine Zwangsbelüftungssystem (10) im Wesentlichen im unteren und/oder mittleren und/oder oberen Teil in Bezug auf die vertikale Ausdehnung des genannten Heizkörpers (1) positioniert ist.

3. Heizkörper (1), insbesondere ein beheizter Handtuchhalter, nach einem der vorhergehenden Ansprüche, **dadurch gekennzeichnet, dass** er wenigstens zwei Heizflächen und zwei entsprechende Belüftungssysteme (5, 5') umfasst, wobei ein erstes Belüftungssystem (5) im unteren Teil in Bezug auf die vertikale Ausdehnung des genannten Heizkörpers (1) positioniert ist und ein zweites Belüftungssystem (5') in seinem oberen Teil positioniert ist.

4. Heizkörper (1), insbesondere ein beheizter Handtuchhalter, nach Anspruch 1, **dadurch gekennzeichnet, dass** der genannte Luftkanal (5) im Wesentlichen entlang der gesamten Höhe des genannten Heizkörpers (1) positioniert ist.

5. Heizkörper (1), insbesondere ein beheizter Handtuchhalter, nach einem der vorhergehenden Ansprüche, **dadurch gekennzeichnet, dass** der genannte Luftkanal (5) in Bezug auf die genannte wenigstens eine Heizfläche des genannten Heizkörpers (1) in einem Winkel zwischen 10° und 45°, vorzugsweise in einem Winkel von 15° geneigt ist.

6. Heizkörper (1), insbesondere ein beheizter Handtuchhalter, nach einem der vorhergehenden Ansprüche, **dadurch gekennzeichnet, dass** das genannte wenigstens eine Belüftungsmittel ein elektrisches Gebläse (4) ist.

7. Heizkörper (1), insbesondere ein beheizter Handtuchhalter, nach einem der vorhergehenden Ansprüche, **dadurch gekennzeichnet, dass** die genannte wenigstens eine Heizfläche eine Vielzahl von Strahlungselementen (2) und einen Einlass-Sammler (3) und einen Auslass-Sammler (3') umfasst, wobei die genannten Sammler (3, 3') in Bezug auf die genannten Strahlungselemente (2) transversal sind.

8. Heizkörper (1), insbesondere ein beheizter Handtuchhalter, nach einem der vorhergehenden Ansprüche, **dadurch gekennzeichnet, dass** er bei seiner Verwendung durch ein Wärmeübertragungsfluid mit einer Temperatur (Tf) gleich oder geringer als ca. 55° herabgefahren wird.

9. Heizkörper (1), insbesondere ein beheizter Handtuchhalter, nach einem der vorhergehenden Ansprüche, **dadurch gekennzeichnet, dass** er ferner Aktivierungs-/Deaktivierungsmittel des genannten wenigstens einen Belüftungsmittels (4) umfasst.

## Revendications

1. Radiateur (1), en particulier un porte-serviette chauffé, ayant au moins une surface radiante, comprenant, sur sa face arrière et en correspondance de ladite au moins une surface radiante, au moins un système de ventilation forcée (10), ledit au moins un système de ventilation forcée (10) comprenant au moins un moyen de ventilation (4) et un conduit d'air correspondant (5), capable de transporter l'air produit par ledit au moins un moyen de ventilation (4) à travers ladite au moins une surface radiante, depuis la partie arrière dudit radiateur (1) vers sa partie avant, ledit radiateur (1) étant **caractérisé en ce que** ledit conduit d'air (5) est incliné d'un angle compris entre 0° et 60° par rapport à ladite au moins une surface radiante dudit radiateur (1).

2. Radiateur (1), en particulier un porte-serviette chauffé, selon la revendication 1, **caractérisé en ce que** ledit au moins un système de ventilation forcée (10) est positionné essentiellement dans la partie inférieure et/ou intermédiaire et/ou supérieure par rapport à l'étendue verticale dudit radiateur (1).

3. Radiateur (1), en particulier un porte-serviette chauffé, selon l'une quelconque des revendications précédentes, **caractérisé en ce qu'**il comprend au moins deux surfaces radiantes et deux systèmes de ventilation correspondants (5, 5'), un premier système de ventilation (5) positionné dans la partie inférieure par rapport à l'étendue verticale dudit radiateur (1) et un deuxième système de ventilation (5') positionné dans sa partie supérieure.

4. Radiateur (1), en particulier un porte-serviette chauffé, selon la revendication 1, **caractérisé en ce que** ledit conduit d'air (5) est positionné essentiellement le long de toute la hauteur dudit radiateur (1).

5. Radiateur (1), en particulier un porte-serviette chauffé, selon l'une quelconque des revendications précédentes, **caractérisé en ce que** ledit conduit d'air (5) est incliné d'un angle compris entre 10° et 45°, de préférence d'un angle de 15°, par rapport à ladite au moins une surface radiante de ladite au moins une surface radiante dudit radiateur (1).

6. Radiateur (1), en particulier un porte-serviette chauffé, selon l'une quelconque des revendications précédentes, **caractérisé en ce que** ledit au moins un moyen de ventilation est un ventilateur électrique (4).

7. Radiateur (1), en particulier un porte-serviette chauffé, selon l'une quelconque des revendications précédentes, **caractérisé en ce que** ladite au moins une surface radiante comprend une pluralité d'éléments radiants (2) et un collecteur d'entrée (3) et un collecteur de sortie (3'), lesdits collecteurs (3, 3') étant transversaux par rapport auxdits éléments radiants (2).

8. Radiateur (1), en particulier un porte-serviette chauffé, selon l'une quelconque des revendications précédentes, **caractérisé en ce que**, pendant son utilisation, il est parcouru par un fluide de transfert de chaleur ayant une température (Tf) équivalente ou inférieure à environ 55°.

9. Radiateur (1), en particulier un porte-serviette chauffé, selon l'une quelconque des revendications précédentes, **caractérisé en ce qu'**il comprend en outre des moyens d'activation / désactivation dudit au moins un moyen de ventilation (4).
